# DEMANDE DE BREVET EUROPEEN

(11) **EP 2 327 308 A1**
(43) Date de publication de la demande: **01.06.2011**
(21) Numéro de dépôt: 10306301.2
(22) Date de dépôt: 26.11.2010
(51) Int. Cl.: A21B 2/00, A21D 13/00

(54) **Procédé de cuisson de pain de mie dans son moule métallique avec limitation de production de croute**

(30) Priorité: 27.11.2009 FR 0958427
(71) Demandeur: Techdiss Technologies S.L., 17740 Vilafant Gerona (ES)
(72) Inventeur: Tastavin, Serge, 17742, AVINYONET DE PUIGVENTOS (ES)
(74) Mandataire: Fantin, Laurent

(57) **Abrégé**

L'objet de l'invention est un procédé de fabrication de pain de mie en moules, caractérisé en ce qu'il comprend les étapes suivantes :
- préparation d'une pâte pour la fabrication de pain de mie,
- mise en place de pâte dans un moule métallique et levée de la pâte,
- soumission de la pâte levée, contenue dans le moule métallique, à des rayonnements micro-ondes de façon à porter la pâte en température dans la masse,
- soumission de la pâte contenue dans les moules et préchauffée par les micro-ondes de l'étape précédente, à une cuisson dans un four traditionnel,
- retrait des moules du four, et
- démoulage du pain de mie cuit.

## Description

La présente invention concerne un procédé de cuisson de pain de mie, de façon industrielle, en limitant la production de croûte, ceci de façon économique.

La cuisson de pain de mie est connue et la consommation de ce produit est en augmentation continue.

La demande des consommateurs a également évolué et se porte plus particulièrement sur des tranches de pain de mie exemptes de croûte. Cette demande est également venue des professionnels qui recherchent ces produits de façon à préparer des canapés et autres sandwichs liés à la restauration rapide.

Une autre demande faite aux industriels cherche à répondre à des demandes de produits festifs faciles à consommer, les demandeurs souhaitant bénéficier de produits tout prêt afin de limiter les temps de préparation au profit du temps utile.

Les quantités de pain de mie très importantes, consommées, amènent les industriels à repenser leur façon de produire ces pains de mie.

On connaît de nombreuses méthodes, la plus simple étant notamment la fabrication en moules métalliques.

De la pâte à pain de mie est versée dans un moule métallique, la pâte est laissée dans une étuve pour une pousse puis le moule métallique avec sa pâte poussée est introduit dans un four généralement du type à résistances électriques, afin de cuire la pâte puis le pain de mie cuit est retiré du moule, le moule est ramené en tête de ligne.

Si ce procédé paraît simple, il reste confronté à de nombreux problèmes.

En effet, le premier est l'énergie consommée dans un four du type à résistances électriques car il faut chauffer l'enceinte et tous ses composants : air, attelage, moules, capots, grilles, ceci avec de fortes déperditions. De plus, les moules sont métalliques et reçoivent sur le dessus un couvercle, soit unitaire pour couvrir un moule, soit multiple pour couvrir un groupe de moules afin que le pain de mie soit maintenu en forme dans chaque moule, sans déborder lors du gonflement à la cuisson. Chaque couvercle pèse souvent plusieurs kilos si bien que la masse métallique à porter en température est importante, induisant une forte inertie externe, avant même de cuire la pâte.

Le rendement énergétique est très mauvais.

Il faut aussi prendre en considération le fait que, dans le cas d'un chauffage dans un tel four, la pâte elle-même est chauffée de l'extérieur vers l' intérieur, par conduction et que le phénomène est lent, si bien que la température extérieure devient importante et durant suffisamment longtemps pour qu'il se forme une croûte et pour que la réaction de Maillard provoque la transformation des sucres et colore la périphérie pendant que le coeur du pain de mie atteint sa température de cuisson et cuit.

Cette conséquence induit la formation d'une croûte épaisse, colorée, non désirée par le consommateur. Cette croûte doit alors être ensuite retirée par découpe sur six faces conduisant à des pertes de plus de 40% de matière cuite.

De ce fait, les quantités fabriquées de produit brut sont très supérieures à la production de produit final nécessaire, le rendement étant au final seulement de moitié.

On note qu'il s'agit là uniquement des pertes matière mais il faut aussi ajouter le coût de main d'oeuvre pour l'opération de retrait de cette croûte elle-même et le recyclage de la matière retirée.

Pour tenter de pallier ces problèmes, des fours en continu ont été mis au point sur des lignes de production en continu. Le problème de l'inertie thermique reste entier.

De plus dans une ligne en continu, tout incident sur la ligne qui interrompt la chaîne induit la poursuite du chauffage du four de façon inutile mais il est inconcevable d'arrêter temporairement le four pour une remise en service ultérieure d'où un gaspillage d'énergie sans autre solution.

Pour limiter le phénomène de formation de croûte, les lignes en continu proposent des fours avec introduction de vapeur d'eau de façon à maintenir un degré hygrométrique suffisant pour que les parois de moule ne montent pas trop en température. Si le résultat peut s'avérer à peu près satisfaisant, on comprend que le bilan énergétique est encore plus mauvais car il faut chauffer ces quantités importantes d'eau.

La présente invention propose un procédé de fabrication de pain de mie qui pallie une grande partie des inconvénients précités et conduit à une amélioration notable du rendement.

Le procédé est maintenant décrit en détail suivant un mode de réalisation particulier, non limitatif.

Pour la suite de la description et pour les revendications, le terme four traditionnel est un four utilisant tout moyen de chauffe comme des résistances électriques, de la vapeur, de la convection à l'exclusion des micro-ondes.

Le procédé selon la présente invention comprend les étapes suivantes :
- préparation d'une pâte pour la fabrication de pain de mie. Cette pâte est du type bien connue à base de farine, lait, levure.
- mise en place de la pâte dans un moule métallique,
- levée de la pâte préférentiellement par étuvage pour la fermentation de la pâte,
- soumission de la pâte ainsi levée contenue dans le moule à des rayonnements micro-ondes de façon à porter la pâte en température dans la masse à une température, préférentiellement inférieure à 95°, particulièrement inférieure ou égale à 70°C à coeur.
- Préférentiellement, pose d'un capot sur le moule,
- soumission de la pâte de pain de mie contenue dans le moule et préchauffée par les micro-ondes de l'étape précédente à une cuisson dans un four traditionnel,
- retrait du four du moule plein avec le pain de mie cuit, prélèvement du capot, et démoulage du pain de mie cuit.

Le capot peut aussi être en matériau transparent aux micro-ondes et dans ce cas, le couvercle peut être mis en place avant l'étape de soumission de la pâte aux rayonnements micro-ondes.

Le procédé consiste à mettre en ligne les différentes étapes pour obtenir une ligne de production continue avec une multiplicité de moules.

Le procédé selon l'invention permet ainsi de limiter fortement la production de croûte. En effet, la soumission de la pâte aux micro-ondes provoque une élévation de température de la pâte à coeur sans pour cela que le moule métallique monte en température, si bien que la paroi dudit moule reste à basse température. La formation de croûte est très limitée voire négligeable et la réaction de Maillard ne se produit pas.

On note que si le capot est métallique, il n'est pas en place à l'entrée du tunnel micro-ondes et si le capot est transparent aux micro-ondes, alors la pénétration des micro-ondes à coeur ne pose pas de problèmes.

Lors de l'émission de micro-ondes, la conduction de la température se fait du coeur de la pâte disposée dans le moule vers la paroi du moule, à l'inverse de la conduction dans un four traditionnel ou les calories diffusent de l'extérieur du moule vers l' intérieur.

On note l'absence de production de vapeur pour maintenir un degré hygrométrique élevé, ce sont autant de calories économisées.

Durant la soumission à la chaleur d'un four traditionnel, le moule métallique monte en température mais le produit sera soumis moins longtemps à des températures élevées comprises entre 180 et 220°C, plus particulièrement aux alentours de 200°C, puisqu'il suffit de parfaire la cuisson et non de chauffer longuement et fortement pour chauffer le moule et monter en température la pâte à coeur pour la cuire dans son ensemble, ceci en chauffant à partir de l'extérieur. Le gradient de température au sein de la pâte est donc plus faible, le chauffage traditionnel apporte uniquement le complément.

De ce fait, l'épaisseur finale de la croûte est très limitée et la couleur est elle-même peut être moins prononcée.

Pour donner un ordre d'idées des durées dans un procédé industrielle, le temps d'exposition aux micro-ondes peut être de l'ordre de quelques secondes à quelques dizaines de secondes, plus précisément compris entre 10 et 50 secondes.

Le temps de séjour dans le tunnel de chauffage à infrarouges est de l'ordre de quelques minutes à plusieurs dizaines de minutes, plus précisément de 10 à 20 minutes.

Le procédé selon la présente invention permet ainsi, en portant la pâte en température grâce à des micro-ondes de gagner du temps et surtout de générer une épaisseur de croûte réduite si bien que les pertes sont limitées d'autant.

On peut estimer gagner environ 50 % de matière et atteindre des économies de chauffage de l'ordre 20% conduisant à un gain d'exploitation de 20 à 50% suivant le produit souhaité.

Si par contre, le pain de mie doit être à croûte mince et doré six faces, les cinq premières faces sont dorées si le passage dans le four traditionnel a été réglé pour obtenir cette croûte dorée.

Le pain de mie ne gonfle plus puisqu'il est cuit et a atteint ses dimensions finales. Le retrait du capot est donc possible sans aucun risque.

## Revendications

1. Procédé de fabrication de pain de mie en moules métalliques, **caractérisé en ce qu'**il comprend les étapes suivantes :
- préparation d'une pâte pour la fabrication de pain de mie,
- mise en place de pâte dans un moule métallique et levée de la pâte,
- soumission de la pâte levée, contenue dans le moule métallique, à des rayonnements micro-ondes de façon à porter la pâte en température dans la masse,
- soumission de la pâte contenue dans les moules et préchauffée par les micro-ondes de l'étape précédente, à une cuisson dans un four traditionnel,
- retrait des moules du four, et
- démoulage du pain de mie cuit.

2. Procédé de fabrication de pain de mie selon la revendication 1, **caractérisé en ce qu'**il consiste à mettre en ligne les différentes étapes pour obtenir une ligne de production continue.

3. Procédé de fabrication de pain de mie selon l'une quelconque des revendications précédentes, **caractérisé en ce qu'**il prévoit de placer sur chaque moule un couvercle transparent aux micro-ondes avant la phase de soumission au rayonnement micro-ondes et à retirer ce couvercle avant le démoulage.

4. Procédé de fabrication de pain de mie selon l'une des revendications 1 ou 2, **caractérisé en ce qu'**il prévoit de placer sur chaque moule un couvercle métallique après la phase de soumission aux rayonnements micro-ondes et à retirer ce couvercle avant démoulage.

5. Procédé de fabrication de pain de mie selon l'une quelconque des revendications précédentes, **caractérisé en ce que** la température à coeur atteinte avec les micro-ondes est inférieure à 95°C, plus particulièrement inférieure à 70°C.

6. Procédé de fabrication de pain de mie selon l'une quelconque des revendications précédentes, **caractérisé en ce que** la température dans le four traditionnel est comprise entre 180 et 220°C plus particulièrement 200°C.

7. Procédé de fabrication de pain de mie selon l'une quelconque des revendications précédentes, **caractérisé en ce que** le temps d'exposition aux micro-ondes est de quelques dizaines de secondes et le temps de séjour dans le tunnel de chauffage à infrarouges est de plusieurs dizaines de minutes.

8. Procédé de fabrication de pain de mie selon la revendication 7, **caractérisé en ce que** le temps d'exposition aux micro-ondes est de 10 à 50 secondes et le temps de séjour dans le tunnel de chauffage à infrarouges est de 10 à 20 minutes.
